# EUROPEAN PATENT APPLICATION

(11) **EP 4 835 669 A1**
(43) Date of publication of application: **04.11.2026**
(21) Application number: 26165129.3
(22) Date of filing: 16.03.2026
(51) Int. Cl.: G06F 9/50

(54) **METHOD AND SYSTEM FOR CONTENT-AWARE DEPLOYMENT OF ARTIFICIAL INTELLIGENCE WORKLOADS IN EDGE-CLOUD ECOSYSTEM**

(30) Priority: 02.05.2025 IN 202521042858
(71) Applicant: Tata Consultancy Services Limited, Maharashtra (IN)
(72) Inventor: SAHA, Ratul Kishore, 700160 Kolkata, West Bengal (IN); NAMBIAR, Manoj Karunakaran, 400607 Thane West, Maharashtra (IN); SINGHAL, Rekha, New York, 10044 (US); MITTAL, Sparsh, 247667 Roorkee, Uttarakhand (IN)
(74) Representative: Goddar, Heinz J.

(57) **Abstract**

Existing approaches deploy model in edge-only or cloud-only environments for performing Artificial Intelligence (AI) workload in AI pipeline, few of the methods uses edge-cloud partitioning mechanisms. These methods lack in balancing the trade-off between latency, performance, and resource efficiency of AI pipeline. Embodiments disclosed herein provide a method and system for content-aware deployment of artificial intelligence workloads in edge-cloud ecosystem. In this approach, optimization framework dynamically selects the models for the task from the model library based on the input data characteristics and system constraints. Identifies the deployment location (edge/cloud) for each task that minimizes latency and better AI performance. The optimization framework leverages content aware approach for minimizing communication and computation latency while considering hardware limitations and environmental factors.

## Description

### CROSS-REFERENCE TO RELATED APPLICATIONS AND PRIORITY

The present application claims priority from Indian application no. 202521042858, filed on May 02, 2025.

### TECHNICAL FIELD

The disclosure herein generally relates to deployment of models and, more particularly, to content-aware deployment of artificial intelligence workloads in edge-cloud ecosystem.

### BACKGROUND

Artificial Intelligence (AI) pipeline comprises of multiple stages such as data collection, pre-processing, and deploying the model for the task. The AI pipeline comprises edge computing and cloud computing, both play a crucial role in processing the data. Both edge and cloud computing have their own advantages and disadvantages based on the computational demands, latency and data sensitivity. AI applications such as robotics, autonomous systems, and IoT rely on real-time processing of data at the edge device. The advancement in handling machine learning workloads has brought the adoption of Large Language Models (LLMs) into a wide array of fields, such as image understanding, Natural Language Processing (NLP), and Natural Language Generation (NLG) and many more. Transformer-based models have emerged as a breakthrough in deep learning and outperform conventional models across several tasks. The gradual increase in performance of the Machine Learning (ML)/LLM models has got significant computational demands, particularly in real-time applications. Deploying these models in resource-constrained edge devices and cloud infrastructure is a challenging task as it leads to trade-off between performance and accuracy. In the conventional systems, industrial AI pipeline utilizes either edge-only or cloud-only architectures for deploying the tasks to the model hosted on these architectures. The edge-only architecture minimizes the latency as it is executed closer to the data source. However, the edge-only architecture suffers from the accuracy of data processed as model compression techniques are required to satisfy resource constraints. The cloud-only architecture provides better accuracy compared to the edge-only architecture, where it suffers from communication latency as it needs to transmit data from edge devices to the cloud. The overall system performance is impacted and may result in privacy concerns, particularly when large volumes of data are involved. As AI workloads become more complex and concurrent, the traditional approaches struggle to balance the trade-offs between latency, performance, and resource efficiency.

The major challenge in optimizing deep learning model deployment across edge-cloud environments in dynamic conditions, particularly when input quality and noise fluctuate under concurrent demands. The major challenge in optimizing the deployment of deep learning model either in edge or cloud environment is the quality of the input data in dynamic conditions, if input comprises noise then it may impact the overall AI pipeline performance. To address these challenges, existing methodologies have integrated edge and cloud computing resources as a more flexible and scalable solution. It is possible to optimize the deployment of models based on real-time requirements, balancing computational efficiency with communication overhead. For a given dynamic environment, a sensor used may receive input data with quality issues such as noise conditions in audio signals or varying lighting conditions for vision tasks. Considering these scenarios, the static deployment of models in the edge-cloud environment may not be sufficient to ensure optimal performance. Many existing techniques focus entirely on edge-based deployments, while others emphasize edge-cloud partitioning mechanisms. Few of the studies have proposed, to reduce model size for on-device inference, latency-aware resource allocation model for edge computing, supporting efficient, scalable, contract-based resource sharing, optimizing task allocation and maintaining confidentiality in edge computing setups. New methods have also emerged to effectively partition deep neural networks (DNNs) between edge and cloud environments. The methods focus only on partitioning a single model between edge and cloud using various partitioning mechanisms.

### SUMMARY

Embodiments of the present disclosure present technological improvements as solutions to one or more of the above-mentioned technical problems recognized by the inventors in conventional systems. For example, in one embodiment, a method for content-aware deployment of artificial intelligence workloads in edge-cloud ecosystem is provided. The method includes: receiving, via one or more hardware processors, one or more input data from a) one or more sensors, b) one or more tasks, and c) an external environment of deployment, an available memory on an edge device and a cloud infrastructure, a communication network type, a plurality of models available in a model library, and one or more concurrency requests for handling an Artificial Intelligence (AI) pipeline; extracting, via the one or more hardware processors, a plurality of feature from the one or more input data, the external environment of deployment, and the communication network type, using one or more feature extraction techniques; computing, via the one or more hardware processors, one or more task content properties using the one or more tasks, wherein the one or more task content properties comprise at least one of a data size of the one or more tasks, and one or more bandwidth requirements of the one or more tasks; optimizing, via the one or more hardware processors, a search space by filtering the model library based on the one or more task content properties and the extracted plurality of feature, wherein the search space comprises a memory size of the plurality of models in the model library for each of the one or more tasks to be deployed on at least one of the edge device and the cloud infrastructure; formulating, via the one or more hardware processors, a constrained optimization problem using at least one of the available memory on the edge device and the cloud infrastructure, a model selection constraint based on the one or more concurrency requests, one or more binary decision variables, and the optimized search space; extracting, via the one or more hardware processors, one or more model from the optimized search space for each of the one or more tasks and a deployment location for each of the one or more tasks, by solving the constrained optimization problem using a binary linear programming solver technique if a solution is found for the constrained optimization problem; and computing, via the one or more hardware processors, an estimated latency for each of the one or more tasks and the AI pipeline, based on the extracted model for each of the one or more tasks and the deployment location for each of the one or more tasks.

In an aspect of the method, the model library comprises the plurality of models available for each of the one or more tasks to be deployed on the edge device or the cloud infrastructure.

In another aspect of the method, a memory constraint of the edge device and the cloud infrastructure are represented as a storage size of the plurality of models deployed on the edge device and the cloud infrastructure, wherein the storage size of the plurality of models does not exceed the available memory on the edge device and the cloud infrastructure, and wherein the storage size is utilized to store the plurality of models and performing an inference of the one or more tasks.

In another aspect of the method, the model selection constraint is used to select at least one model from the model library for each of the one or more tasks.

In another aspect of the method, the binary decision variables are represented as a selection of the model for each of the one or more tasks and the deployment location for each of the one or more tasks.

In another embodiment, a system is provided. The system includes one or more hardware processors, a communication interface, and a memory storing a plurality of instructions. The plurality of instructions cause the one or more hardware processors to: receive one or more input data from a) one or more sensors, b) one or more tasks, and c) an external environment of deployment, an available memory on an edge device and a cloud infrastructure, a communication network type, a plurality of models available in a model library, and one or more concurrency requests for handling an Artificial Intelligence (AI) pipeline; extract a plurality of feature from the one or more input data, the external environment of deployment, and the communication network type, using one or more feature extraction techniques; compute one or more task content properties using the one or more tasks, wherein the one or more task content properties comprise at least one of a data size of the one or more tasks, and one or more bandwidth requirements of the one or more tasks; optimize a search space by filtering the model library based on the one or more task content properties and the extracted plurality of feature, wherein the search space comprises a memory size of the plurality of models in the model library for each of the one or more tasks to be deployed on at least one of the edge device and the cloud infrastructure; formulate a constrained optimization problem using at least one of, the available memory on the edge device and the cloud infrastructure, a model selection constraint based on the one or more concurrency requests, one or more binary decision variables and the optimized search space; extract one or more model from the optimized search space for each of the one or more tasks and a deployment location for each of the one or more tasks by solving the constrained optimization problem using a binary linear programming solver technique if a solution is found for the constrained optimization problem; and compute an estimated latency for each of the one or more tasks, and the AI pipeline, based on the extracted model for each of the one or more tasks and the deployment location for each of the one or more tasks.

In an aspect of the system, the model library comprises the plurality of models available for each of the one or more tasks to be deployed on the edge device or the cloud infrastructure.

In another aspect of the system, a memory constraint of the edge device and the cloud infrastructure are represented as a storage size of the plurality of models deployed on the edge device and the cloud infrastructure, wherein the storage size of the plurality of models does not exceed the available memory on the edge device and the cloud infrastructure, and wherein the storage size is utilized to store the plurality of models and for performing an inference of the one or more tasks.

In another aspect of the system, the model selection constraint is used to select one model from the model library for each of the one or more tasks.

In another aspect of the system, the binary decision variables are represented as a selection of the model for each of the one or more tasks and the deployment location for each of the one or more tasks.

In yet another aspect, there are provided one or more non-transitory machine-readable information storage mediums comprising one or more instructions which when executed by one or more hardware processors cause: receiving one or more input data from a) one or more sensors, b) one or more tasks, and c) an external environment of deployment, an available memory on an edge device and a cloud infrastructure, a communication network type, a plurality of models available in a model library, and one or more concurrency requests for handling an Artificial Intelligence (AI) pipeline; extracting a plurality of feature from the one or more input data, the external environment of deployment, and the communication network type, using one or more feature extraction techniques; computing one or more task content properties using the one or more tasks, wherein the one or more task content properties comprise at least one of a data size of the one or more tasks, and one or more bandwidth requirements of the one or more tasks; optimizing a search space by filtering the model library based on the one or more task content properties and an extracted plurality of features, wherein the search space comprises a memory size of the plurality of models in the model library for each of the one or more tasks to be deployed on at least one of the edge device and the cloud infrastructure; formulating a constrained optimization problem using at least one of the available memory on the edge device and the cloud infrastructure, a model selection constraint based on the one or more concurrency requests, one or more binary decision variables, and the optimized search space; extracting one or more model from the optimized search space for each of the one or more tasks and a deployment location for each of the one or more tasks, by solving the constrained optimization problem using a binary linear programming solver technique if a solution is found for the constrained optimization problem; and computing an estimated latency for each of the one or more tasks, and the AI pipeline based on the extracted model for each of the one or more tasks and the deployment location for each of the one or more tasks.

In an aspect of the non-transitory computer readable medium, the model library comprises the plurality of models available for each of the one or more tasks to be deployed on the edge device or the cloud infrastructure.

In another aspect of the non-transitory computer readable medium, an memory constraint of the edge device and the cloud infrastructure are represented as a storage size of the plurality of models deployed on the edge device and the cloud infrastructure, wherein the storage size of the plurality of models does not exceed the available memory on the edge device and the cloud infrastructure, and wherein the storage size is utilized to store the plurality of models and for performing an inference of the one or more tasks.

In another aspect of the non-transitory computer readable medium, the model selection constraint is used to select one model from the model library for each of the one or more tasks.

In another aspect of the non-transitory computer readable medium, the binary decision variables are represented as a selection of the model for each of the one or more tasks and the deployment location for each of the one or more tasks.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A illustrates an exemplary block diagram of a system for content-aware deployment of artificial intelligence workloads in edge-cloud ecosystem, according to some embodiments of the present disclosure.
FIG. 1B illustrates a process overview of the system of FIG. 1A, in accordance with some embodiments of the present disclosure.
FIGS. 2A and 2B is a flow diagram illustrating a method for content-aware deployment of artificial intelligence workloads in edge-cloud ecosystem, using the system of FIG. 1, according to some embodiments of the present disclosure.
FIG. 3 illustrates a plot associated with a data communication latency for one or more tasks under different network set up, accordance with some embodiments of the present disclosure.
FIG. 4 illustrates a plot associated with a dynamic behavior of robots in different environment conditions, accordance with some embodiments of the present disclosure.
FIG. 5 illustrates a plot associated with an optimized latency vs different environment set up deploy with different communication set up, accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Industrial Artificial Intelligence (AI) pipeline utilizes either edge computing or cloud computing to deploy models to perform certain tasks. The edge-only and the cloud-only architecture suffer from accuracy and communication latency respectively. The AI pipeline faces the challenge of managing concurrent, high-volume workloads across the resource-constrained edge devices and the cloud infrastructure. In a dynamic environment condition the input data has quality issues such as, noise conditions in audio signals or varying lighting conditions for vision tasks, in such scenarios AI pipeline face the challenge of managing concurrent, high-volume workloads across resource-constrained the edge devices and the cloud infrastructure. The existing approaches struggle to balance the trade-offs between communication latency, model performance, and resource efficiency. Existing methodologies have, integrated the edge and the cloud computing resources as a more flexible and scalable solution and reduces model size for on-device inference, latency-aware resource allocation model for edge computing, supporting efficient, scalable, contract-based resource sharing, optimize task allocation and maintain confidentiality in the edge computing setups, and new methods have also emerged to effectively partition the deep neural networks (DNNs) between the edge device and the cloud environments. The existing approaches only focus on partitioning a single model between the edge device and the cloud environment using various partitioning mechanisms.

To address the technical challenges in the art, embodiments disclosed herein provide method and system for content-aware deployment of artificial intelligence workloads in edge-cloud ecosystem approach which involves the following steps. Initially, an input data from sensors, tasks, an external environment of deployment, an available memory on an edge device and a cloud infrastructure, a communication network type, a plurality of models available in a model library, and concurrency requests for handling an Artificial Intelligence (AI) pipeline are obtained. Then, features are extracted from the input data, the external environment of deployment, and the communication network type, using feature extraction techniques. Further, task content properties are computed using the tasks. Further, a search space is filtered for optimizing the model library based on the task content properties and the extracted features. A constrained optimization problem is then formulated using at least one of the available memories on the edge device and the cloud infrastructure, a model selection constraint, binary decision variables, and the optimized search space. The constrained optimization problem is then solved using a binary linear programming solver technique to extract a model from the optimized search space for each of the tasks and a deployment location for each of the tasks. Further, a latency for each of the tasks is computed based on the extracted model for each of the tasks and the deployment location for each of the tasks. The present disclosure considers the available memory on the edge device and the cloud infrastructure to deploy the suitable model to perform the one or more tasks. The content aware deployment method disclosed in the present disclosure contributes to reduced communication latency of the entire AI pipeline.

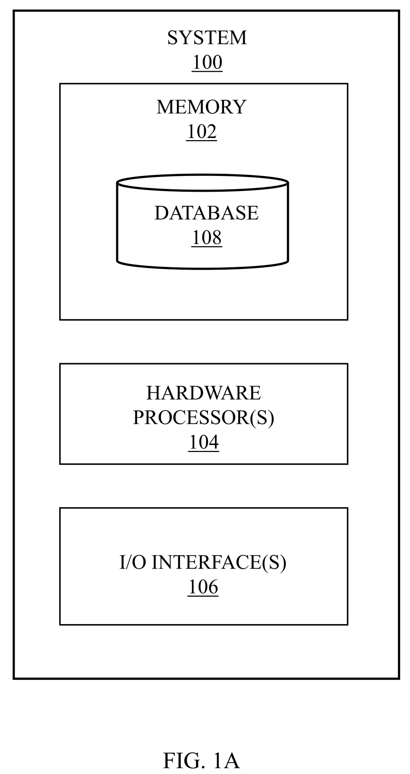

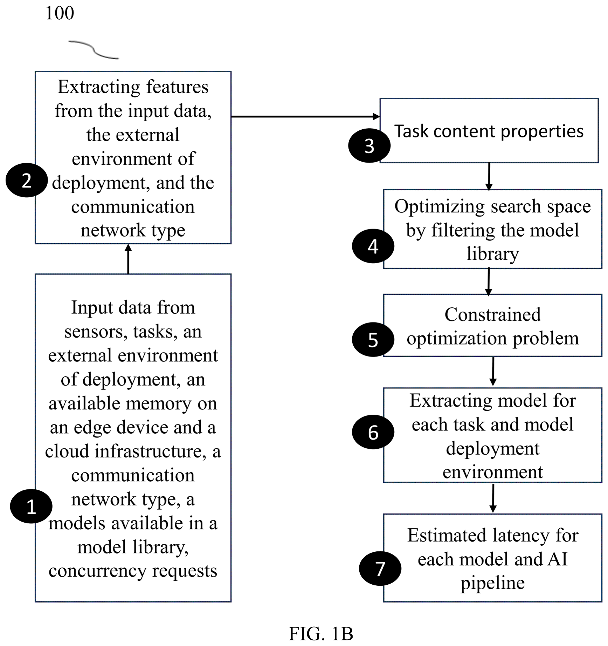

Referring now to the drawings, and more particularly to FIG. 1 through FIG. 5, where similar reference characters denote corresponding features consistently throughout the figures, there are shown preferred embodiments, and these embodiments are described in the context of the following exemplary system and/or method.

FIG. 1A depicts an exemplary system 100 for content-aware deployment of artificial intelligence workloads in edge-cloud ecosystem, according to some embodiments of the present disclosure. In an embodiment, the system 100 includes one or more processors 104, communication interface device(s) 106 or Input/Output (I/O) interface(s) 106 or user interface 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud, and the like.

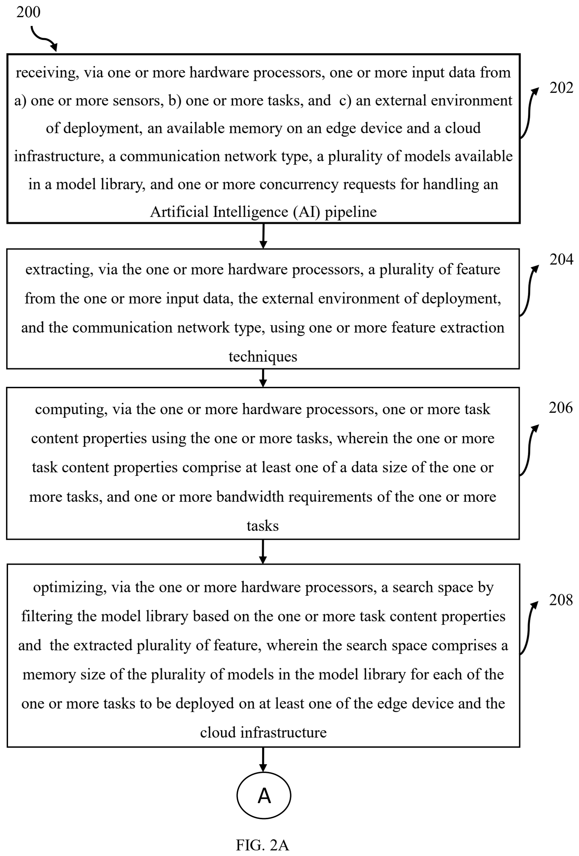

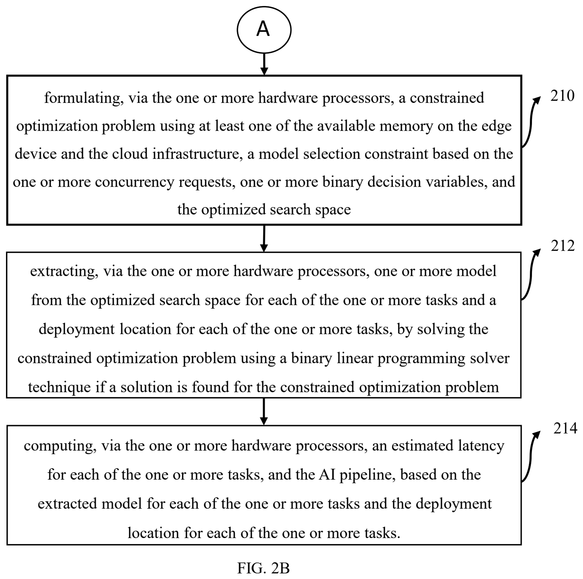

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. The memory 102 may include any computer-readable medium known in the art including, for example, volatile memory, such as Static Random-Access Memory (SRAM) and Dynamic Random-Access Memory (DRAM), and/or non-volatile memory, such as read only memory (ROM), erasable programmable ROM, flash memories, hard disks, optical disks, and magnetic tapes. The database 108 stores information pertaining to inputs fed to the system 100 and/or outputs generated by the system (e.g., at each stage), specific to the methodology described herein. Functions of the components of system 100 are explained in conjunction with process overview of the system in FIG. 1B and flow diagram depicted in FIG. 2A and FIG. 2B.

In an embodiment, the system 100 comprises one or more data storage devices or the memory 102 operatively coupled to the processor(s) 104 and is configured to store instructions for execution of steps of the method 200 depicted in FIG. 2A and FIG. 2B by the processor(s) or one or more hardware processors 104.

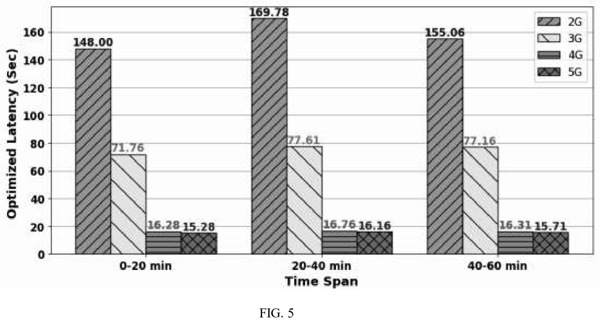

Further, the memory 102 includes a database 108. The database 108 can store the plurality of models available in a model library, one or more concurrency requests for handling an Artificial Intelligence (AI) pipeline, one or more input data from one or more sensors and one or more tasks. The steps of the method of the present disclosure will now be explained with reference to the components or blocks of the system 100 as depicted in FIG. 1A and FIG. 5. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

FIG. 2A and FIG. 2B is a flow diagram illustrating a method 200 to content-aware deployment of artificial intelligence workloads in edge-cloud ecosystem, according to some embodiments of the present disclosure. At step 202 of the method 200, the one or more hardware processors 104 are configured to receive one or more input data from a) one or more sensors, b) one or more tasks, and c) an external environment of deployment, an available memory on an edge device and a cloud infrastructure, a communication network type, a plurality of models available in a model library, and one or more concurrency requests for handling an Artificial Intelligence (AI) pipeline. The one or more sensors configured on a host device captures the one or more input data. The one or more input data may comprise noise data. Each of the one or more tasks has an associated task name. For example, the one or more tasks are transcription, Natural Language Processing (NLP), Natural Language Understanding (NLU), Natural Language Generation (NLG), image captioning and so on. The external environment of deployment is representative of a number of computing sources available in the AI pipeline such as an edge device computing, cloud infrastructure computing and so on. The communication network type is utilized for transmitting a data from the edge device to the cloud infrastructure. For example, the communication network type is 2G, 3G, 4G, 5G and so on. The model library comprises of the plurality of models designed to perform the one or more tasks to be deployed on the edge device or the cloud infrastructure. The plurality of models varies in terms of computational and memory requirements, allowing for flexibility across the external environment of deployment scenarios and performance needs. The one or more concurrency requests are the one or more sensors or the external environmental deployment conditions where the AI pipeline will operate, specify a plurality of model needs, and the communication network type of the edge device-cloud infrastructure communication.

In an embodiment, let one or more sensors capture the one or more input data. The input data may have noise data. The one or more input data along with associated noise can degrade AI pipeline performance leading to erroneous or unpredictable results, and varying noise conditions in audio signals or varying lighting conditions for vision tasks. Based on the one or more input data characteristics the AI pipeline selects the model and deployment environment to perform the one or more tasks based on the one or more input data.

Further, at step 204 of the method 200, the one or more hardware processors 104 are configured to extract a plurality of feature from the one or more input data, the external environment of deployment, and the communication network type. The system 100 may use any suitable technique, such as, but not limited to, a trained deep neural network, for extracting the one or more features. The plurality of features such as characteristics of the one or more input data, a transmission speed, a bandwidth of external environment of deployment are extracted using the feature extraction techniques. The plurality deep neural network is trained on the data such as, but not limited to, a plurality of tasks comprising, one or more input data along with varying noise condition captured from the one or more sensors, transmission speed of the different types of communication network, the bandwidth of the external environment of deployment required to perform one or more tasks.

Further, at step 206 of the method 200, the one or more hardware processors 104 are configured to compute one or more task content properties such as, but not limited to, a data size of the one or more tasks, and one or more bandwidth requirements of the one or more tasks, using the one or more tasks. The one or more tasks comprises a detail of the one or more tasks, for example, Automated Speech Recognition (ASR) task comprises the details such as data size and speech acquired at the external environment of the deployment for the ASR task. Using the one or more tasks details computing the one or more task content properties.

Further, at step 208 of the method 200, the one or more hardware processors 104 are configured to optimize a search space by filtering the model library. The model library comprises the plurality of models for one or more tasks. Based on the extracted plurality of feature and the one or more task content properties filtering the model library by selecting one or more models to perform one or more tasks. For example, the one or more input data comprises the varying noise condition, to process the noise level along with the one or more input data suitable the one or more models are selected from the model library. By filtering the search space, the overall search time can be optimized. Optimizing search space leads to choose the suitable the one or more models to process the one or more input data comprising varying noise condition.

Further, at step 210 of the method 200, the one or more hardware processors 104 are configured to formulate a constrained optimization problem using a) the available memory on the edge device and the cloud infrastructure, b) a model selection constraint based on the one or more concurrency requests, c) one or more binary decision variables, (d) the optimized search space, constrained optimization problem represented as: $\hat{x} , \hat{y} {=}_{x , y}^{min} {\sum }_{i = 1}^{N} {\sum }_{j = 1}^{{K}_{i}} {y}_{i , j} \left({x}_{i}{L}_{edge , i , j}+\left(1-{x}_{i}\right)\left(\begin{matrix}{L}_{cloud , i , j} + \\ {L}_{communication , i , j}\end{matrix}\right)\right)$ (1) where, *y_{i,j}* indicates whether model *j* is selected for task *Tᵢ, xᵢ* indicates the deployment location for task *Tᵢ*, *L_{edge,i,j}* is computation latency incurred if model *j* is deployed on the edge for task *Tᵢ*, *L_{cloud,i,j}* is computation latency incurred if model *j* is deployed on the cloud for task *Tᵢ*, *L_{communication,i,j}* is communication latency incurred if model *j* is deployed in the cloud for task *Tᵢ*.

The available memory on the edge device and the cloud infrastructure are taken into consideration to formulate a memory constraint. The edge device has limited memory available for deploying models, and the cloud infrastructure also has a maximum memory capacity limit that cannot be exceeded. Let *m_{edge,i,j}* represent a storage size of the model *j* from the plurality of model for one or more tasks *Tᵢ* if it is deployed on the edge, and *m_{cloud,i,j}* represent the storage size of the model *j* from the plurality of model for one or more tasks *Tᵢ* if it is deployed on the cloud infrastructure. The storage size is utilized to store the plurality of models and for performing an inference of the one or more tasks. This indicates that all memory needs for loading and running the model are fully accounted for during deployment planning. The available memory on the edge device is denoted as *M_{edge}* and the available memory on the cloud infrastructure is denoted as *M_{cloud}.* The memory constraint is formulated such that a combined memory usage of plurality of models deployed on the edge device does not exceed the total available memory on the edge device, and similarly for cloud infrastructure deployments: ${\sum }_{i = 1}^{N} {\sum }_{j = 1}^{{K}_{i}} {y}_{i , j} {x}_{i} {m}_{edge , i , j} \leq {M}_{edge}$ (2) ${\sum }_{i = 1}^{N} {\sum }_{j = 1}^{{K}_{i}} {y}_{i , j} \left(1-{x}_{i}\right) {m}_{cloud , i , j} \leq {M}_{cloud}$ (3) where, Let *m_{edge,i,j}* represent the memory usage of the model *j* from the plurality of model for one or more task *Tᵢ* if it is deployed on the edge, *m_{cloud,i,j}* represent the memory usage of the model j from the plurality of model for one or more task *Tᵢ* if it is deployed on the cloud, *M_{edge}* is the available memory on the edge device, *M_{cloud}* is the available memory on the cloud infrastructure, *y_{i,j}* indicates whether model *j* is selected for task *Tᵢ* and *xᵢ* indicates the deployment location for task *Tᵢ*.

The model selection constraints select exactly one model for each task *Tᵢ* based on the concurrency requests, wherein concurrency requests are a pre-defined by a user, the concurrency requests are pre-defined by a user to choose the models which parallelly perform one or more tasks. The model selection constraint is represented as: ${\sum }_{j = 1}^{{K}_{i}} {y}_{i , j} = 1 for all i = 1 , 2 , … , N$ (4) where, *y_{i,j}* indicates whether model *j* is selected for task *Tᵢ*.

The one or more binary decision variables are *y_{i,j}* and *xᵢ*, indicating the model selected for each of the one or more tasks and the external environment deployment location for each of the one or more tasks, and are represented as: ${y}_{i , j} ∈ \left\{0, 1\right\} , {x}_{i} ∈ \left\{0, 1\right\}$ (5) where, *y_{i,j}* indicates whether model *j* is selected for task *Tᵢ* and *xᵢ* indicates the deployment location for task *Tᵢ*.

Further, at step 212 of the method 200, the one or more hardware processors 104 are configured to solve the constrained optimization problem by using a binary linear programming solver technique. If a feasible solution found for the constrained optimization problem; then one or more model is extracted from the optimized search space for each of the one or more tasks and the external environment of deploying the one or more models, to perform each of the one or more tasks. If the feasible solution is not found or an unbounded solution is found, then an error message "deployment not possible" is displayed.

Further, at step 214 of the method 200, the one or more hardware processors 104 are configured to compute an estimated latency for each of the one or more tasks and for the entire AI pipeline with the edge device-the cloud infrastructure setup, based on the extracted model, for each of the one or more tasks and the deployment location for each of the one or more tasks.

In an embodiment, below mentioned is an exemplary pseudo code for the above method steps described herein.

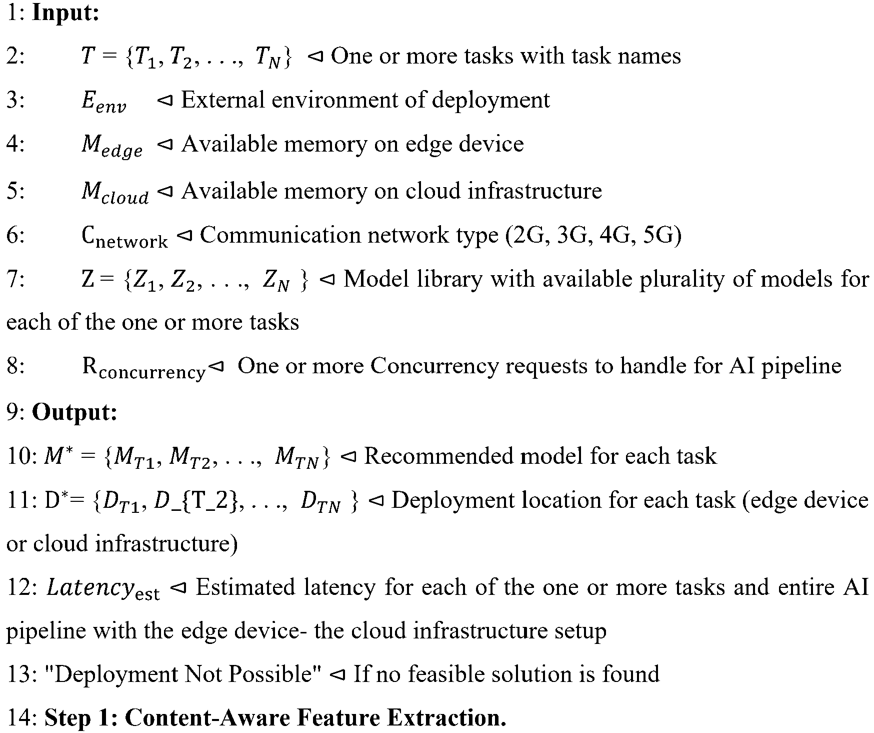

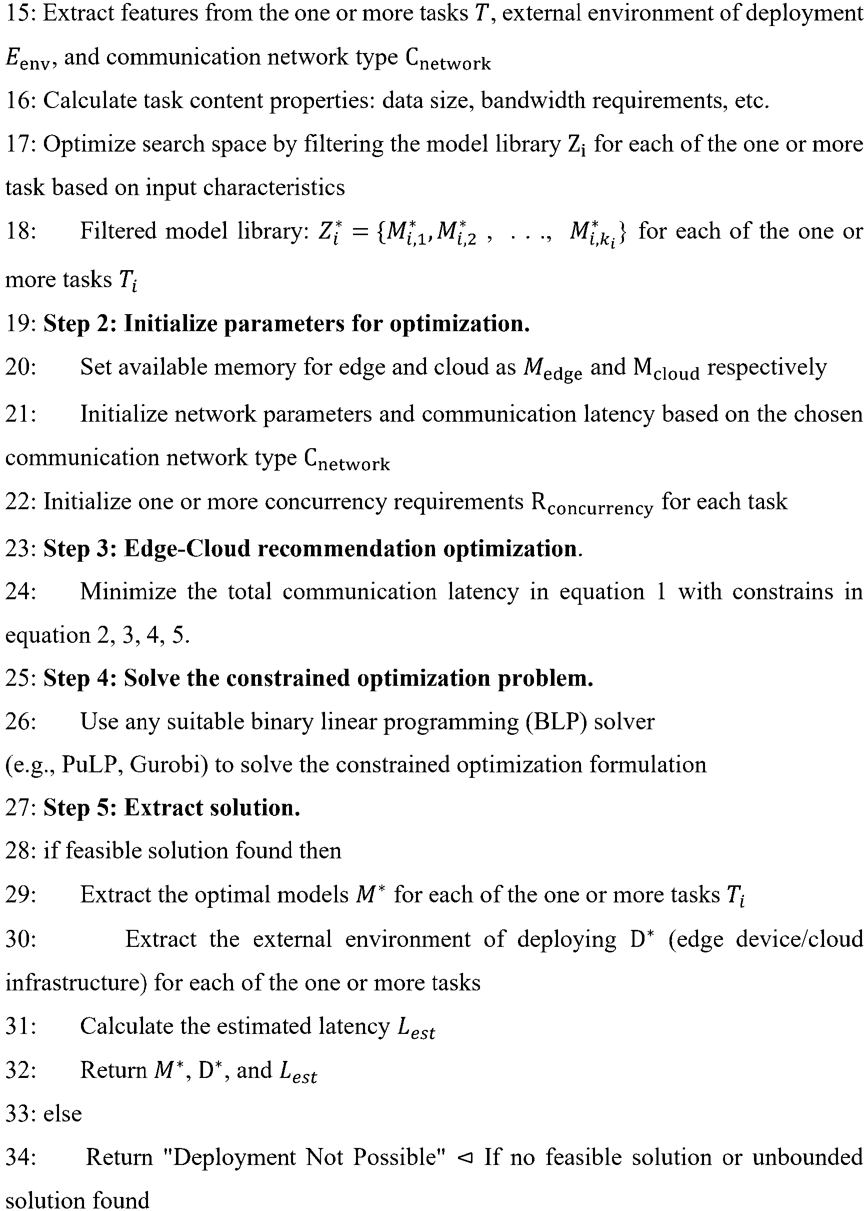

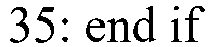

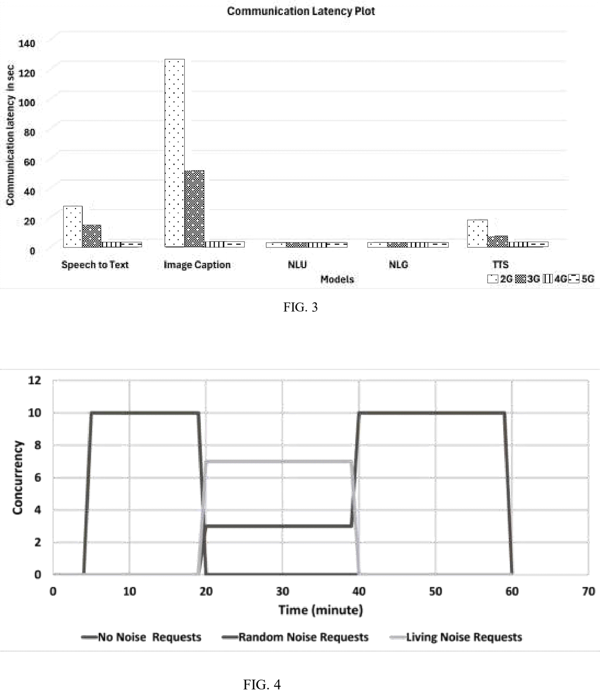

FIG. 3 illustrates a plot associated with an experimental setup of measuring communication latency of the tasks with different network setups, accordance with some embodiments of the present disclosure. A round-trip communication latency varies across different network setups. FIG. 3 reveals a reduction in the latency from 2G to 5G as network speed improves. The communication latency, alternately referred to as latency, plays a critical role in the constrained optimization problem, as it directly impacts the performance of the AI pipeline when models are deployed in the cloud. For tasks like speech recognition or image captioning, where large amounts of data are transmitted, network speed can greatly affect a response time. Hence, the optimization process must carefully consider the communication latency when selecting a plurality of models for deployment, ensuring efficient task execution while balancing a resource constraint of the edge device-cloud infrastructure environment.

FIG. 4 illustrates a plot associated with an experimental setup involving dynamic behavior of robots in different environment conditions, accordance with some embodiments of the present disclosure. The method 200 reduces the search space within the model library by focusing on the models suited to the specific one or more input data. Search space optimization contributes to efficiently solving the constrained optimization problem, to identify the deployment choices (the edge device/the cloud infrastructure) while ensuring low latency within the specific communication network condition.

FIG. 5 illustrates a graph plotting optimized latency vs different environment setup deploy, with different communication setups, accordance with some embodiments of the present disclosure. In this setup, the performance of the method 200 was evaluated across different network configurations (2G, 3G, 4G, and 5G) and noise environments. FIG. 5 demonstrates the optimized latency achieved using the method 200, which dynamically adapts to both network conditions and environmental noise conditions. In noise-free scenarios, the latency remains low across all communication setups, showing that the method 200 performs efficiently under ideal conditions. However, as robots transition into noisy environments, a content-aware approach comes into play. By narrowing down the model selection within the model library based on the specific noise type, we solve the optimization problem within this restricted search space. This ensures that the best deployment and optimized latency are identified, even under challenging conditions. During a final phase (40-60 minutes), where all robots operate exclusively in a random noise environment, the method 200 dynamically adjusts the deployment choices. The system reconfigures itself in response to environmental changes, selecting models that suit the new conditions, thus maintaining optimized performance.

### Experimental analysis:

### 1. Hardware and Network Set up:

1.1 Edge setup:
To implement the edge component of the architecture, a standard CPU-based laptop is utilized. A laptop features four physical Intel i5 processors, each operating at a clock speed of 2.70GHz, along with an 8 GB of available memory. The edge device was tasked with running real-time AI models and handling sensor inputs from multiple camera sources in an in-house lab environment. This setup provided sufficient computational capacity to capture live video feeds in real-time and efficiently transfer data to the cloud. This system operated on a Windows platform, deploying Python-based scripts for the edge-side AI processing, with no extra computational load applied to the device during the experiments.
1.2 Cloud setup:
For the cloud infrastructure, leveraging an Amazon Cloud Services (AWS) cloud infrastructure, specifically utilizing an EC2 instances. The cloud infrastructure was designed to dynamically execute AI models based on the recommendations of the method 200. A recommender system of method 200 determined the appropriate model to run in the cloud infrastructure based on factors like concurrent workload and the one or more input data characteristics. The edge device and the cloud infrastructure communicated through a pre-defined network configuration, ensuring seamless data transfer. Additionally, the recommender system of the method 200 could recommend a type of EC2 instance to be spun up or scaled based on the incoming workload and the features of the one or more input data to the AI pipeline.

**Table 1**

| **Network** | **Upload Speed** | **Download Speed** |
|---|---|---|
| 2G | 50 KB/S | 100 KB/S |
| 3G | 128 KB/S | 384 KB/S |
| 4G | 10 MB/S | 50 MB/S |
| 5G | 50 MB/S | 300 MB/S |

1.3 Network setup:
To enable real-time communication between the edge device and the cloud infrastructure, the method 200 experimented with different network capabilities, including 2G, 3G, 4G, and 5G. The choice of network was determined based on data transfer utilization. The typical upload and download speed of different network set up is illustrated in Table 1. The connection was secured with certified encryption, ensuring safety and confidentiality as guaranteed by the cloud service provider. Once the secure communication link was established, the edge device could seamlessly transfer data to the cloud without interruptions.

**Table 2**

| **Task** | **Models** | **Size (MB)** |
|---|---|---|
| **ASR** | Whisper - Tiny | 161 |
| | Whisper - Base | 290 |
| | Whisper - Small | 935 |
| | Whisper - Large | 3305 |
| **Image Caption** | GRIT | 816 |
| | Florence2 - Base | 464 |
| | Florence2-Large | 1540 |
| **NLU** | TAGE | 112 |
| **NLG** | all-MiniLM-L6-v2 | 91 |
| | all-MiniLM-L12-v2 | 134 |
| **TTS** | Speech T5 | 571 |
| | FastSpeech 2 | 495 |

1.4 Model library for the robotic application:
In experimental setup, focusing on a multi-task AI pipeline designed for robotic applications. The one or more tasks involved in this pipeline include Automatic Speech Recognition (ASR), image captioning, NLU, NLG, and Text-to-Speech (TTS). For each of the one or more tasks, constructing a model library, which comprises the plurality of models. Table 2 summarizes the models selected for experimentation for each of the one or more tasks within a robotic pipeline. Each of the plurality of model within a one or more tasks performs the same operation but varies in terms of a size, a computational complexity, and a performance. Note that models in each task comprises same operation with a different computation, a memory footprint, an accuracy level as a qualitative outcome. The method 200 optimization function is designed to select the most appropriate model from the model library based on the constraints of the available resources in the edge device- the cloud infrastructure environment. This ensures that the system operates efficiently while respecting the limitations imposed by the edge device's memory.

### 2. Communication Latency:

In this robotic application, five distinct tasks must be executed to complete an overall process. For each of the one or more tasks, data must be transferred from the edge device to the cloud infrastructure when the model is deployed on the cloud infrastructure, making communication time a critical factor in the edge device-the cloud infrastructure setup. A communication latency is influenced by the network setup, and four different configurations have been considered to analyze the effects. For instance, in the ASR task, the audio signal is sent to the cloud infrastructure, and the corresponding text is received and for TTS task just reverse of the above happens, while in the image captioning task, a Red, Green and Blue (RGB) image is transmitted, and the text description is returned. For Natural Language Generation (NLG) and Natural Language Understanding (NLU) tasks text is the only input and output of the models.

**Table 3**

| **Mod el libra ry** | **Concur rency 1** | | **Concur rency 2** | | **Concur rency 3** | | **Concur rency 7** | | **Concur rency 10** | | **Concur rency 15** | | **Concur rency 20** | |
|---|---|---|---|---|---|---|---|---|---|---|---|---|---|---|
| | **E dg e** | **Cl ou d** | **E dg e** | **Cl ou d** | **E dg e** | **Cl ou d** | **E dg e** | **Cl ou d** | **E dg e** | **Cl ou d** | **E dg e** | **Cl ou d** | **E dg e** | **Cl ou d** |
| **Whis per Tiny** | 0. 73 | 0.6 17 | 1. 16 2 | 0.6 29 | 1.6 34 | 0. 69 4 | 3. 97 3 | 0.8 94 | 5.6 21 | 1.3 93 | 8.7 45 | 2.1 7 | 11. 88 | 3.1 61 |
| **Whis per Base** | 1. 42 3 | 0.6 36 | 2. 24 7 | 0.6 65 | 3.5 93 | 0. 66 6 | 8. 77 6 | 0.9 26 | 11. 72 4 | 1.4 26 | 20. 20 3 | 2.1 24 | 24. 24 | 3.1 65 |
| **Whis per Smal l** | 4. 38 9 | 0.6 88 | 8. 08 3 | 0.6 86 | 13. 84 8 | 0. 71 8 | 29 .3 8 | 1.1 43 | 50. 13 9 | 1.8 79 | 77. 56 8 | 2.7 19 | 10 0.5 8 | 3.7 97 |
| **Whis per Larg e** | 27 .4 2 | 0.9 91 | - | 1.3 62 | - | 1. 86 5 | - | 3.6 09 | - | 5.2 92 | - | 8.1 7 | - | 10. 52 3 |
| **GRI T** | 25 | 2.2 9 | - | 2.6 1 | - | 3. 29 8 | - | 7.7 22 | - | 9.7 | - | 12. 65 7 | - | 15. 97 |
| **Flore nce 2 Base** | - | 2.0 1 | - | 2.2 9 | - | 2. 98 | - | 7.0 1 | - | 9.0 16 | - | 12. 12 | - | 14. 97 |
| **Flore nce 2 Larg e** | - | 2.9 8 | - | 3.1 2 | - | 3. 87 | - | 8.1 | - | 9.8 9 | - | 12. 91 | - | 15. 37 |
| **TAG E** | 0. 48 1 | 0.4 27 | 0. 69 5 | 0.8 48 | 0.9 27 | 1. 01 | 2. 23 | 2.7 4 | 3.5 | 4.0 41 | 5.5 7 | 6.4 2 | 7.9 7 | - |
| **All-Mini LM-L6-V2** | 0. 56 1 | 0.5 1 | 0. 83 7 | 0.4 8 | 0.9 9 | 0. 47 9 | 2. 51 8 | 0.6 1 | 3.7 1 | 0.9 35 | 5.8 03 | 1.5 46 | 9.5 8 | 2.0 2 |
| **All-Mini LM-L12-V2** | 0. 78 2 | 0.6 33 | 1. 10 2 | 0.5 34 | 1.6 51 | 0. 54 5 | 3. 58 8 | 0.8 23 | 6.1 37 | 1.6 | 10. 30 9 | 2.0 3 | 13. 41 2 | 2.8 9 |
| **Spee ch T5** | 1. 13 | 0.2 8 | 1. 44 | 0.3 11 | 2.2 | 0. 31 4 | 4. 63 | 0.4 91 | 7 | 0.8 79 | 10. 66 8 | 1.3 17 | 13. 98 | 1.8 16 |
| **Fast Spee ch 2** | - | 0.2 5 | - | 0.2 5 | - | 0. 29 | - | 0.3 2 | - | 0.6 87 | - | 1.1 01 | - | 1.5 2 |

As shown in FIG. 3, the round-trip communication latency varies across different network setups. FIG. 3 reveals a significant reduction in the communication latency from 2G to 5G as network speed improves. This communication latency plays a critical role in the constraint optimization problem, as it directly impacts the performance of the system when models are deployed in the cloud infrastructure. It is observed from FIG. 3 that for tasks like speech recognition or image captioning, where large amounts of data are transmitted, network speed can greatly affect the response time. Hence, the optimization process must carefully consider the communication latency when selecting models for deployment, ensuring efficient task execution while balancing the resource constraints of the edge device- the cloud infrastructure environment.

### 3. Content agnostic workload deployment at edge device-cloud infrastructure set up:

In this study, detailed evaluation of the edge device- the cloud infrastructure deployment strategy of the method 200, analyzing how models from the model library perform under different network conditions and concurrency levels in terms of latency. Table 3 presents the execution times for all models within the model library running on both the edge device and the cloud infrastructures, across various levels of concurrency. Note that, the "-" symbols in the table refer to the model deployment failure or unacceptable computation latency within that hardware. These latency numbers are found using Jmeter test of the models. These latency measurements provide a comprehensive dataset that allows us to predict performance at other concurrency levels by interpolation or extrapolation. Table 3 provides raw computation latencies for models deployed in the cloud, network communication latency was assessed separately for the edge device- the cloud infrastructure setup from the previous communication latency section. The method 200 operates in a content-agnostic framework, meaning that external environment factors to the one or more input data were not considered. On the other hand, no noisy input is considered. Therefore, the method 200 focused on optimizing the deployment strategy through a proposed formulation that selects the models from the model library based on real-time performance and network conditions.

**Table 4**

| Communicati on : 2G | | | | | | | | | | | |
|---|---|---|---|---|---|---|---|---|---|---|---|
| Concur rency | T1 | | T2 | | T3 | | T4 | | T5 | | Opti mize d Laten cy (seco nds) |
| | Mod el (*MT* 1) | Deploy ment (*DT*1 ) | Mod el (*MT* 2) | Deplo yment (*DT*2) | Mo del (*M T*3 ) | Deplo yment *(D73)* | Mo del (*M T4)* | Deplo yment (*DT*4) | Model *(M75)* | Deplo yment (*DT*5) | |
| 1 | Whi sper - Tiny | Edge | GRI T | Edge | TA GE | Cloud | Al l-Mi ni L M L6 V 2 | Cloud | Speech T5 | Edge | 27.8 |
| 10 | Whi sper - Tiny | Edge | Flor ence Base | Cloud | TA GE | Edge | Al l-Mi ni L M L6 V 2 | Cloud | Speech T5 | Edge | 148 |
| Communicati on: 3G | | | | | | | | | | | |
| Concur rency | T1 | | T2 | | T3 | | T4 | | T5 | | Opti mize d Laten cy (seco nds) |
| | Mod el (*MT* 1) | Deploy ment (*DT*1 ) | Mod el (*MT* 2) | Deplo yment (*DT*2) | Mo del (*M T*3 ) | Deplo yment *(D73)* | Mo del (*M T4)* | Deplo yment (*DT*4) | Model *(M75)* | Deplo yment (*DT*5) | |
| 1 | Whi sper - Tiny | Edge | GRI T | Edge | TA GE | Cloud | Al l-Mi ni L M L6 V 2 | Cloud | Speech T5 | Edge | 27.79 |
| 10 | Whi sper - Tiny | Edge | Flor ence Base | Cloud | TA GE | Edge | Al l-Mi ni L M L6 V 2 | Cloud | FastSp eech2 | Cloud | 71.76 |

| Communicati on: 4G | | | | | | | | | | | |
|---|---|---|---|---|---|---|---|---|---|---|---|
| Concur rency | T1 | | T2 | | T3 | | T4 | | T5 | | Opti mize d Laten cy (seco nds) |
| | Mod el (*MT* 1) | Deploy ment (*DT*1 ) | Mod el (*MT* 2) | Deplo yment (*DT*2) | Mo del (*M T*3 ) | Deplo yment *(D73)* | Mo del (*M T4)* | Deplo yment (*DT*4) | Model *(M75)* | Deplo yment (*DT*5) | |
| 1 | Whi sper - Tiny | Edge | Flor ence Base | Cloud | TA GE | Cloud | Al l-Mi ni L M L6 V 2 | Cloud | FastSp eech2 | Cloud | 4.55 |
| 10 | Whi sper - Tiny | Clou d | Flor ence Larg e | Cloud | TA GE | Edge | All - Mi ni L M L1 2-V2 | Cloud | FastSp eech2 | Cloud | 16.28 |

| Communicati on: 5G | | | | | | | | | | | |
|---|---|---|---|---|---|---|---|---|---|---|---|
| Concur rency | T1 | | T2 | | T3 | | T4 | | T5 | | Opti mize d Laten cy (seco nds) |
| | Mod el (*MT* 1) | Deploy ment (*DT*1 ) | Mod el (*MT* 2) | Deplo yment (*DT*2) | Mo del (*M T*3 ) | Deplo yment *(D73)* | Mo del (*M T4)* | Deplo yment (*DT*4) | Model *(M75)* | Deplo yment (*DT*5) | |
| 1 | Whi sper - Tiny | Clou d | Flor ence Base | Cloud | TA GE | Cloud | Al l-Mi ni L M L6 V 2 | Cloud | FastSp eech2 | Cloud | 3.96 |
| 10 | Whi sper - Tiny | Clou d | Flor ence Base | Cloud | TA GE | Edge | Al l-Mi ni L M L6 V 2 | Cloud | FastSp eech2 | Cloud | 15.68 |

The results, summarized in Table 4, present the most efficient deployment strategies for two representative concurrency levels (1 and 10). The table shows the models selected from the model library and the deployment choices in the edge device - the cloud infrastructure ecosystem. Finally, the optimized latency is evaluated using the selected models and the deployment choices using equation 1. It is observed from the Table 4, in slower networks, like 2G and 3G, recommender system favors the edge device deployments to minimize the communication latency by avoiding network-induced delays. This decision aligns with the higher cost of data transmission in these networks, where latency from communication can significantly affect end-to-end performance. Conversely, in faster networks such as 4G and 5G, the rapid data transmission rates mitigate the impact of communication delays, shifting the optimization toward cloud infrastructure based deployments. Here, the low network latency makes offloading computational tasks to the cloud infrastructure more efficient, as cloud environments typically offer greater computational resources. The results show that with higher network speeds and increased concurrency levels, overall end-to-end latency is significantly reduced, underscoring the effectiveness of the method 200 in optimizing system performance for real-time applications. A dynamic, network-aware optimization provides the robust edge device-the cloud infrastructure deployment strategy that adapts to both network conditions and system load, ensuring minimal latency and efficient resource utilization across a range of scenarios.

### 4. Content-aware workload deployment at the edge device-cloud infrastructure set up:

In this study, exploring a more realistic robotic application pipeline, where robots operate in real-world environments and process an audio as input. Specifically, the method 200 focuses on the challenge of handling noisy audio, which frequently arises in such scenarios. The noises are sourced from real-world environments, including living room disturbances and random background sounds, making the one or more input data more representative of real-life conditions.

The method 200 highlights the difference between two deployment approaches: the content-agnostic and the content-aware. In the content-agnostic approach, the AI pipeline processes all inputs uniformly, without considering the nature of the one or more input data. However, this often leads to suboptimal results, as seen when models like Whisper Tiny struggle to handle noisy speech inputs. This mismatch can significantly degrade the overall performance of the system. When the one or more input data is noise-free, the content-agnostic approach may be employed with models that have a small memory footprint. However, in real-world environments, input signals are rarely noise-free, requiring the content-agnostic approach to use larger models to handle any noise present in the signal. In contrast, the content-aware approach can judiciously choose between smaller or larger models depending on the type of noise from the model library, using system resources more efficiently while maintaining the desired level of qualitative accuracy. This ensures that the chosen models are better suited to the specific content, resulting in more accurate and efficient processing. For example, when noisy speech is detected, a more robust ASR model can be selected, optimizing both the quality and performance of the system.

**Table 5**

| **Environment** | **Whisper Tiny** | **Whisper Base** | **Whisper Small** | **Whisper Large** |
|---|---|---|---|---|
| **Speech with no Noise (Content-Agnostic)** | ✔ | ✔ | ✔ | ✔ |
| **Speech with random noise** | *X* | ✔ | ✔ | ✔ |
| **Speech with living noise** | *X* | *X* | ✔ | ✔ |

The method 200 demonstrates that the content-aware deployment in the edge device- the cloud setup offers a more realistic and effective solution. By tailoring a model selection based on the one or more input characteristics, reducing the search space for optimization, enhancing both system robustness and end-to-end performance. Table 5 illustrates how different ASR models perform under varying conditions of noise, showcasing the effectiveness of the content-aware deployment in adapting to real-world challenges. Simulating two types of noisy speech signals: one mixed with random noise (zero mean and standard deviation of 0.2) and the other with living noise. The results demonstrate that for speech with random noise, the Whisper-Tiny model struggles to produce the desired qualitative output. However, other versions of the Whisper model perform better. On the other hand, for speech signals affected by living noise, only the Whisper-Small and Whisper-Large models are capable of delivering the expected speech-to-text accuracy. This approach allows to refine the model selection process, effectively bounding the constraint optimization problem within the model library by focusing on the most suitable models for specific noise content.

In this experiment, simulating the concurrent operation of 10 mobile robots deployed in various environments, as described earlier. The goal is to identify the optimal deployment choices of models and platforms within the edge device-the cloud infrastructure paradigm, aiming to minimize latency. The experiment spans 60 minutes, divided into three distinct phases:
- (0-20 min time stamp): All 10 robots operate in a noise-free environment, representing a content-agnostic deployment scenario. In this stage, the system works under ideal conditions, where no noise is present, and the focus is on baseline performance.
- (20-40 min time stamp): During this phase, 3 robots are exposed to random noise, while the remaining 7 work in a living noise scenario. Here, the need for the content-aware approach becomes evident. By considering the nature of the noise in the environment, this approach helps determine the most suitable model deployments within the edge device- the cloud infrastructure setup, ensuring optimized latency and performance.
- (40-60 min time stamp): All 10 robots now operate in a random noise environment. Again, the content-aware strategy is crucial for selecting the right models and deployment configurations. Without this approach, optimizing latency in such challenging conditions would be significantly harder.

The content-aware method reduces the search space within the model library by focusing on models best suited to the specific input conditions. This enables to efficiently solve the constraint optimization problem, finding the best deployment choices while ensuring low latency within the specific communication network condition. FIG. 4 illustrates this dynamic environment set up of the concurrent robots.

### 5. Summary:

Evaluating the performance of method 200 across different network configurations (2G, 3G, 4G, and 5G) and noise environments. Figure 5 demonstrates the optimized latency achieved using the method 200, which dynamically adapts to both network conditions and environmental noise conditions. In noise-free scenarios, the latency remains low across all communication setups, showing that the method 200 performs efficiently under ideal conditions. However, as robots transition into noisier environments, the method 200 the content-aware approach comes into play. By narrowing down the model selection within the model library based on the specific noise type, we solve the optimization problem within this restricted search space. This ensures that the best deployment and optimized latency are identified, even under challenging conditions. During the final phase (40-60 minutes), where all robots operate exclusively in a random noise environment, the method 200 dynamically adjusts deployment choices. The system reconfigures itself in response to environmental changes, selecting models that best suit the new conditions, thus maintaining optimized performance. The dynamic adaptation to both environmental and network constraints showcase the robustness and flexibility of the method 200. By leveraging the content-aware deployment, effectively reducing computational overhead and maintain low latency even in noisy environments, ensuring that real-world robotic applications can continue operating with high efficiency.

### 6. Ablation study : Content-agnostic vs Content-aware deployment

Comparing and analyzing the performance of the content-agnostic and the content-aware deployment approaches within the edge device - the cloud infrastructure ecosystem, focusing on their trade-offs in real-world robotic applications. The content-agnostic deployment represents the simplest case, where the environment's input characteristics (such as noise or complexity) are not considered. In this approach, the constraint optimization problem is solved using the entire model library, regardless of the content or context of the input. As a result, this approach consistently provides the lowest latency across all network configurations (2G, 3G, 4G, and 5G), as shown in Figure 5. However, while this approach minimizes latency, it sacrifices qualitative performance, as it does not consider whether the chosen models are optimal for handling the specific input content.

In contrast, the content-aware deployment approach adapts the model selection to the environment, such as noisy or complex input conditions. In this scenario, the optimization problem is solved within a restricted subset of the model library, focusing on models that are better suited to handle the specific characteristics of the input data. For instance, in noisy environments, the deployment choices dynamically shift to models that maintain better qualitative performance (e.g., speech-to-text accuracy for noisy audio input), even if this results in slightly higher latency compared to the content-agnostic approach.

The trade-off between these two approaches is clear: content-agnostic deployment offers the advantage of lower latency but may compromise the accuracy or quality of the output, making it less suitable for real-time industrial scenarios where precise performance is critical. On the other hand, the content-aware deployment, while resulting in higher latency due to the need to evaluate models within a restricted subset of the model library, provides more reliable qualitative outcomes. This is especially important in complex or noisy environments, where deploying the right model based on input conditions ensures robustness and efficiency.

The content-aware deployment offers a more practical solution for real-world robotic workloads, particularly in environments where the quality of output is just as important as latency. The increased latency in the content-aware deployment can be seen as a necessary trade-off to ensure the system adapts effectively to varying environmental conditions, providing a balance between optimized performance and qualitative accuracy. This trade-off highlights the importance of adapting the deployment strategy based on specific application needs, where the content-agnostic deployment may suffice in simpler cases, but the content-aware deployment is essential in more demanding environments.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein addresses unresolved problem of deploying Artificial Intelligence (AI) workload based on the dynamic environment and the nature of the task properties. The embodiment, thus provides mechanism for content-aware deployment of artificial intelligence workloads in edge-cloud ecosystem. Moreover, the embodiments herein further provide optimization framework for dynamically selecting the model from the model library and identifying optimal deployment environment.

It is noted that embodiments described herein are discussed in the context of a Large Language Model (LLM) / Artificial Intelligence (AI) model / Machine Learning (ML) model and/ or with a mentioned training data set. It is to be understood by a person having ordinary skill in the art or person skilled in the art that the referred AI/ML/LLM model(s) are exemplary and shall not be construed as limiting the scope of the present disclosure and they may be trained by any training dataset that meets the mentioned defining characteristics / or has characteristics that define the exemplary training dataset mentioned.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving (202), via one or more hardware processors, one or more input data from a) one or more sensors, b) one or more tasks, and c) an external environment of deployment, an available memory on an edge device and a cloud infrastructure, a communication network type, a plurality of models available in a model library, and one or more concurrency requests for handling an Artificial Intelligence (AI) pipeline;
extracting (204), via the one or more hardware processors, a plurality of feature from the one or more input data, the external environment of deployment, and the communication network type, using one or more feature extraction techniques;
computing (206), via the one or more hardware processors, one or more task content properties using the one or more tasks, wherein the one or more task content properties comprise at least one of a data size of the one or more tasks, and one or more bandwidth requirements of the one or more tasks;
optimizing (208), via the one or more hardware processors, a search space by filtering the model library based on the one or more task content properties and the extracted plurality of feature, wherein the search space comprises a memory size of the plurality of models in the model library for each of the one or more tasks to be deployed on at least one of the edge device and the cloud infrastructure;
formulating (210), via the one or more hardware processors, a constrained optimization problem using at least one of the available memory on the edge device and the cloud infrastructure, a model selection constraint based on the one or more concurrency requests, one or more binary decision variables, and the optimized search space;
extracting (212), via the one or more hardware processors, one or more model from the optimized search space for each of the one or more tasks and a deployment location for each of the one or more tasks, by solving the constrained optimization problem using a binary linear programming solver technique if a solution is found for the constrained optimization problem; and
computing (214), via the one or more hardware processors, an estimated latency for each of the one or more tasks, and the AI pipeline, based on the extracted model for each of the one or more tasks and the deployment location for each of the one or more tasks.

2. The processor implemented method as claimed in claim 1, wherein the model library comprises the plurality of models available for each of the one or more tasks to be deployed on the edge device or the cloud infrastructure.

3. The processor implemented method as claimed in claim 1, wherein a memory constraint of the edge device and the cloud infrastructure are represented as a storage size of the plurality of models deployed on the edge device and the cloud infrastructure, wherein the storage size of the plurality of models does not exceed the available memory on the edge device and the cloud infrastructure, and wherein the storage size is utilized to store the plurality of models and for performing an inference of the one or more tasks.

4. The processor implemented method as claimed in claim 1, wherein the model selection constraint is used to select at least one model from the model library for each of the one or more tasks.

5. The processor implemented method as claimed in claim 1, wherein the binary decision variables are represented as a selection of the model for each of the one or more tasks and the deployment location for each of the one or more tasks.

6. A system (100), comprising:
one or more hardware processors (104);
a communication interface (106); and
a memory (102) storing a plurality of instructions, wherein the plurality of instructions cause the one or more hardware processors to:
receive one or more input data from a) one or more sensors, b) one or more tasks, and c) an external environment of deployment, an available memory on an edge device and a cloud infrastructure, a communication network type, a plurality of models available in a model library, and one or more concurrency requests for handling an Artificial Intelligence (AI) pipeline;
extract a plurality of feature from the one or more input data, the external environment of deployment, and the communication network type, using one or more feature extraction techniques;
compute one or more task content properties using the one or more tasks, wherein the one or more task content properties comprise at least one of a data size of the one or more tasks, and one or more bandwidth requirements of the one or more tasks;
optimize a search space by filtering the model library based on the one or more task content properties and the extracted plurality of feature, wherein the search space comprises a memory size of the plurality of models in the model library for each of the one or more tasks to be deployed on at least one of the edge device and the cloud infrastructure;
formulate a constrained optimization problem using at least one of the available memory on the edge device and the cloud infrastructure, a model selection constraint based on the one or more concurrency requests, one or more binary decision variables, and the optimized search space;
extract one or more model from the optimized search space for each of the one or more tasks and a deployment location for each of the one or more tasks by solving the constrained optimization problem using a binary linear programming solver technique if a solution is found for the constrained optimization problem; and
compute an estimated latency for each of the one or more tasks, and the AI pipeline, based on the extracted model for each of the one or more tasks and the deployment location for each of the one or more tasks.

7. The system as claimed in claim 6, wherein the model library comprises the plurality of models available for each of the one or more tasks to be deployed on the edge device or the cloud infrastructure.

8. The system as claimed in claim 6, wherein a memory constraint of the edge device and the cloud infrastructure are represented as a storage size of the plurality of models deployed on the edge device and the cloud infrastructure, wherein the storage size of the plurality of models does not exceed the available memory on the edge device and the cloud infrastructure, and wherein the storage size is utilized to store the plurality of models and for performing an inference of the one or more tasks.

9. The system as claimed in claim 6, wherein the model selection constraint is used to select one model from the model library for each of the one or more tasks.

10. The system as claimed in claim 6, wherein the binary decision variables are represented as a selection of the model for each of the one or more tasks and the deployment location for each of the one or more tasks.

11. One or more non-transitory machine-readable information storage mediums comprising one or more instructions which when executed by one or more hardware processors cause:
receiving one or more input data from a) one or more sensors, b) one or more tasks, and c) an external environment of deployment, an available memory on an edge device and a cloud infrastructure, a communication network type, a plurality of models available in a model library, and one or more concurrency requests for handling an Artificial Intelligence (AI) pipeline;
extracting a plurality of feature from the one or more input data, the external environment of deployment, and the communication network type, using one or more feature extraction techniques;
computing one or more task content properties using the one or more tasks, wherein the one or more task content properties comprise at least one of a data size of the one or more tasks, and one or more bandwidth requirements of the one or more tasks;
optimizing a search space by filtering the model library based on the one or more task content properties and the extracted plurality of feature, wherein the search space comprises a memory size of the plurality of models in the model library for each of the one or more tasks to be deployed on at least one of the edge device and the cloud infrastructure;
formulating a constrained optimization problem using at least one of the available memory on the edge device and the cloud infrastructure, a model selection constraint based on the one or more concurrency requests, one or more binary decision variables, and the optimized search space;
extracting one or more model from the optimized search space for each of the one or more tasks and a deployment location for each of the one or more tasks, by solving the constrained optimization problem using a binary linear programming solver technique if a solution is found for the constrained optimization problem; and
computing an estimated latency for each of the one or more tasks, and the AI pipeline, based on the extracted model for each of the one or more tasks and the deployment location for each of the one or more tasks.

12. The one or more non-transitory machine readable information storage mediums as claimed in claim 11, wherein the model library comprises the plurality of models available for each of the one or more tasks to be deployed on the edge device or the cloud infrastructure.

13. The one or more non-transitory machine readable information storage mediums as claimed in claim 11, wherein a memory constraint of the edge device and the cloud infrastructure are represented as a storage size of the plurality of models deployed on the edge device and the cloud infrastructure, wherein the storage size of the plurality of models does not exceed the available memory on the edge device and the cloud infrastructure, and wherein the storage size is utilized to store the plurality of models and for performing an inference of the one or more tasks.

14. The one or more non-transitory machine readable information storage mediums as claimed in claim 11, wherein the model selection constraint is used to select at least one model from the model library for each of the one or more tasks.

15. The one or more non-transitory machine readable information storage mediums as claimed in claim 11, wherein the binary decision variables are represented as a selection of the model for each of the one or more tasks and the deployment location for each of the one or more tasks.
